# EUROPÄISCHE PATENTSCHRIFT

(11) **EP 1 791 459 B1**
(45) Veröffentlichungstag und Bekanntmachung des Hinweises auf die Patenterteilung: **14.10.2015**
(21) Anmeldenummer: 05777661.9
(22) Anmeldetag: 23.08.2005
(51) Int. Cl.: A47L 15/48, D06F 58/24, D06F 58/26, D06F 25/00, A47L 15/00, B01D 53/26, D06F 58/20, F26B 21/08

(54) **TROCKNUNGSVERFAHREN FÜR EIN HAUSHALTSGERÄT UND HAUSHALTSGERÄT**
DRYING METHOD FOR A HOUSEHOLD APPLIANCE AND HOUSEHOLD APPLIANCE
PROCÉDÉ DE SÉCHAGE POUR UN APPAREIL ÉLECTROMÉNAGER ET APPAREIL ÉLECTROMÉNAGER

(30) Priorität: 13.09.2004 DE 102004044176
(43) Veröffentlichungstag der Anmeldung: 06.06.2007
(73) Patentinhaber: BSH Hausgeräte GmbH, 81739 München (DE)
(72) Erfinder: CLASSEN, Egbert, 86637 Wertingen (DE); ROSENBAUER, Michael, 86756 Reimlingen (DE); STECK, Wolfgang, 89537 Giengen (DE); STICKEL, Martin, 89537 Giengen (DE)
(86) Internationale Anmeldenummer: PCT/EP2005/054133
(87) Internationale Veröffentlichungsnummer: WO 2006/029953

(56) Entgegenhaltungen:
- EP-A1- 1 651 090
- DE-A1- 10 334 792
- DE-A1- 19 813 924
- DE-U- 6 926 182
- DE-U1- 20 101 641
- GB-A- 2 094 961
- PATENT ABSTRACTS OF JAPAN Bd. 1996, Nr. 02, 29. Februar 1996 (1996-02-29) & JP 07 265138 A (AISIN SEIKI CO LTD), 17. Oktober 1995 (1995-10-17)

## Beschreibung

Die Erfindung betrifft ein Trocknungsverfahren für ein Haushaltsgerät, insbesondere eine Geschirrspülmaschine oder ein Waschtrockner bzw. ein Wäschetrockner, zur Trocknung von zu behandelndem Gut in einem mit Gas, insbesondere Luft, gefüllten Behandlungsraum, wobei ein wärmeaufnehmendes Teil eines Peltier-Elements dem Gas des Behanldungsraumes Wärmeenergie entzieht zur Kondensation von Feuchtigkeit im Gas. Die Erfindung betrifft außerdem ein Haushaltsgerät zur Durchführung des Trocknungsverfahrens, insbesondere eine Geschirrspülmaschine oder Waschtrockner bzw. Wäschetrockner, umfassend einen mit Gas, insbesondere Luft, befüllten Behandlungsraum, gebildet von einem Behälter, insbesondere Spülbehälter, für zu behandelndes Gut, insbesondere Geschirr, und ein Peltier-Element, aufweisend einen wärmeaufnehmenden Teil und einen wärmeabgebenden Teil, wobei das wärmeaufnehmende Teil dahingehend im Haushaltsgerät angeordnet ist, dass Wärmeenergie dem Gas des Behandlungsraums entzogen wird.

In Haushaltsgeräten ist es im Allgemeinen notwendig, dass das zu behandelnde Gut getrocknet werden muss. Das ist beispielsweise bei Waschtrocknern und Wäschetrocknern der Fall sowie insbesondere bei Geschirrspülmaschinen. Eine Geschirrspülmaschine weist bekanntlich ein Spülverfahren auf, dessen Programmablauf normalerweise aus wenigstens einem Teilprogrammabschnitt Vorspülen, einem Teilprogrammschritt Reinigen, wenigstens einem Teilprogrammschritt Zwischenspülen, einem Teilprogrammschritt Klarspülen und einem Teilprogrammschritt Trocknen besteht. Zur Erhöhung des Reinigungseffekts wird dabei die Spülflüssigkeit vor oder während eines Teilprogrammschritts erwärmt. Die Erwärmung der Spülflüssigkeit erfolgt üblicherweise mittels elektrischer Heizungen. Zur Trocknung von Spülgut, d. h. Geschirr, in einer Geschirrspülmaschine sind unterschiedliche Trocknungssysteme bekannt.

In einer Geschirrspülmaschine kann beispielsweise das Geschirr bzw. Spülgut durch Eigenwärmetrocknung getrocknet werden, wenn die Spülflüssigkeit in einem Teilprogrammschritt Klarspülen erhitzt wird und somit das heiß klargespülte Spülgut durch die so aufgewärmte Eigenwärme des Spülguts während des nachfolgenden Teilprogrammschritts Trocknen von selbst trocknet. Um diese Eigenwärmetrocknung zu erreichen, wird die Spülflüssigkeit in einem Teilprogrammschritt Klarspülen auf eine bestimmte Temperatur erwärmt und über Sprüheinrichtungen auf das Spülgut aufgebracht. Durch die relativ hohe Temperatur der Spülflüssigkeit in dem Teilprogrammschritt Klarspülen von üblicherweise von 65 - 75° wird erreicht, dass eine hinreichend große Wärmemenge auf das Spülgut übertragen wird, sodass das am Spülgut anhaftende Wasser durch die im Spülgut gespeicherte Wärme verdampft. Nachteiligerweise wird jedoch für die starke Erhitzung sowohl der Spülflüssigkeit als auch des Spülgutes auf die hohen Temperaturen eine sehr große Energiemenge benötigt.

Aus der DE 30 21 746 A1 der Anmelderin ist ein Verfahren zum Betreiben einer Geschirrspülmaschine bekannt, bei dem ein wärmeleitend mit dem Spülbehälter verbundener Wärmetauscher während eines Teilprogrammschritts Trocknen mit kaltem Frischwasser gespeist wird. Dadurch wird eine Kondensationsfläche auf der. Innenseite des Spülbehälters erzeugt, an der die Feuchtigkeit kondensiert und das entstehende Kondenswasser im Spülbehälter verbleibt. Da der Temperaturunterschied zwischen der Feuchtluft und dem eingefüllten Frischwasser relativ gering ist und die Frischwassermenge sich stetig erwärmt, ergibt sich der Nachteil, dass die Kondensation der Feuchtluft lange dauert und stetig geringer wird. Außerdem ist auch bei diesem Verfahren eine starke Erwärmung des Spülgutes und der Spülflüssigkeit in einem auf dem Teilprogrammschritt Trocknen vorhergehenden Teilprogrammschritt, insbesondere Klarspülung, auf eine hohe Temperatur erforderlich, was einen hohen Energieaufwand bedeutet.

In einem weiteren Trocknungsverfahren für Geschirrspülmaschinen wird die mit Wasser gesättigte Luft von einem Gebläse umgewälzt und von einer Heizung erwärmt. Dies geschieht insbesondere in einem Kanal, in welchem das Gebläse und eine elektrische Widerstandsheizung angeordnet ist. Über einen Auslass wird gesättigte Luft aus dem Spülbehälter angesaugt und über einen Einlass wieder erwärmt in den Spülbehälter eingeblasen. Durch die starke Erwärmung der Luft kann diese dadurch wieder mehr Luftfeuchtigkeit aufnehmen, d. h. dadurch das Geschirr trocknen. Eine Möglichkeit zur Kondensation der Feuchtigkeit in der Luft ist bei diesem Trocknungssystem nachteiligerweise nur eingeschränkt möglich. Lediglich an den Spülbehälterwänden, die sich unter Umständen im thermischen Kontakt zur Umgebungsluft befinden, besteht eine Kondensationsmöglichkeit. Die Spülbehälterwände erwärmen sich jedoch ebenfalls, sodass nur ein geringer Temperaturunterschied und damit eine geringe Kondensationsleistung vorhanden ist. Ergänzend kann auch bei diesem Trocknungssystem mit Gebläse am Spülbehälter ein Wärmetauscher angeordnet sein, um die Kondensationsleistung und dadurch das Trocknungsergebnis geringfügig zu verbessern.

Es sind auch Geschirrspülmaschinen bekannt, bei denen die mit Feuchtigkeit angereicherte Luft nach außen geblasen wird. Dies hat den Nachteil, dass Einrichtungsgegenstände, z. B. Küchenmöbel, durch die austretende Feuchtigkeit geschädigt werden können. Außerdem sind auch Geschirrspülmaschinen bekannt, welche vor Ausleiten der Feuchtluft an die Umgebung diese über Kondensationsflächen leiten, an denen die Feuchtigkeit kondensiert. Dadurch kann das Risiko von Schäden an Einrichtungsgegenständen vermindert werden, weil ein geringeres Maß an Feuchtigkeit aus der Geschirrspülmaschine an die Umgebung ausgeleitet wird.

Aus der DE 198 13 924 A1 ist eine Kondensationseinrichtung für ein Haushaltsgerät und ein Verfahren für den Betrieb desselben bekannt. Ein Peltier-Element verfügt über eine wärmeabgebende Fläche und über eine wärmeaufnehmende Fläche. Die wärmeaufnehmende Fläche entzieht einer Arbeitsraumatmosphäre eines Arbeitsraums des Haushaltsgeräts Wärme, wodurch Feuchtigkeit der Arbeitsraumatmosphäre an der gekühlten Stelle kondensiert. Die wärmeaufnehmende Fläche ist bei einer Geschirrspülmaschine entweder im Inneren des Spülraums angeordnet oder außerhalb des Spülraums an der Außenseite der Spülraumwand und thermisch mit dieser gekoppelt, um die Wärmeenergie aus dem Spülraum mittels Wärmeleitung durch die Spülraumwand aufzunehmen. Die Wärme abgebende Fläche gibt die Wärme an die Umgebungsluft oder an ein wärmeaufnehmendes Volumen, z. B. Wasser, ab. Zur Erhöhung der Wärmeabgabe an die Umgebungsluft kann an der wärmeabgebenden Fläche ein Füllkörper angeordnet sein sowie zusätzlich ein Ventilator. Außerdem kann in einer weiteren Ausgestaltung das wärmeaufnehmende Volumen auch strömendes Wasser sein, das der Frischwasserzufuhr kontinuierlich entnehmbar ist. Nachteiligerweise wird damit bei dieser Kondensationseinrichtung für ein Haushaltsgerät und dem Verfahren für den Betrieb desselben lediglich die wärmeaufnehmende Fläche des Peltier-Elements dazu genutzt, durch Abkühlen das in der Spülraumatmosphäre enthaltene Wasser in Gas- oder Dampfphase zu kondensieren. Die wärmeabgebende Fläche des Peltier-Elements kann damit nachteiligerweise nicht zu einer Verbesserung der Trocknungsleistung in der Spülraumatmosphäre genutzt werden.

Die DE 69 26 182 U betrifft einen Wäschetrockner, der Peltierzellen mit Wärmetauschern an den Warm- und Kaltseiten aufweist. Es ist eine Luftleitung vorhanden, deren Anfänge an den Innenraum eines die zu trocknende Wäsche aufnehmenden Gefäßes anschließbar sind und die nacheinander an den Kaltseiten und den Warmseiten der Peltierzellen vorbeiführt.

Beim Kondensations-Wäschetrockner der DE 201 01 641 U1 führt von der Trockentrommel ein Abluftkanal zu einem Luft/Luft-Wärmeaustauscher und von diesem ein Zuluftkanal zurück zur Trockentrommel. Dabei ist dem Abluftkanal die kalte Seite und dem Zuluftkanal die warme Seite einer zur Vorkühlung der Prozeßluft bestimmten, thermoelektrischen Wärmepumpe zugeordnet. Diese enthält vorzugsweise eine plattenförmig ausgebildete Peltier-Anordnung.

Die Geschirrspülmaschine der unter Art. 54(3) EPÜ fallenden EP 1 651 090 B1 weist ein mit dem Spülbehälter luftleitend verbundenes Leitungssystem auf, in dem wenigstens ein Peltierelement angeordnet ist. Das Peltierelement wird dabei einerseits zur Abkühlung und dadurch zur Trocknung als auch andererseits zur Erwärmung durchgeleiteter Luft aus dem Spülbehälter verwendet.

Aufgabe der vorliegenden Erfindung ist es, ein Trocknungsverfahren für Haushaltsgeräte und ein Haushaltsgerät zur Verfügung zu stellen, mit der es möglich ist, das zu behandelnde Gut im Haushaltsgerät in kurzer Zeit effizient bei geringem Energieeinsatz zu trocknen.

Diese Aufgabe wird gelöst durch das erfindungsgemäße Trocknungsverfahren für ein Haushaltsgerät gemäß Patentanspruch 1 und das erfindungsgemäße Haushaltsgerät gemäß Patentanspruch 8. Vorteilhafte Weiterbildungen der Erfindung sind in den Unteransprüchen gekennzeichnet.

In einem erfindungsgemäßen Trocknungsverfahren für ein Haushaltsgerät, insbesondere eine Geschirrspülmaschine oder ein Waschtrockner bzw. Wäschetrockner, zur Trocknung von zu behandelndem Gut in einem mit Gas, insbesondere Luft, gefüllten Behandlungsraum, gebildet von einem Behälter, entzieht ein wärmeaufnehmendes Teil eines Peltier-Elements dem Gas des Behanldungsraumes Wärmeenergie zur Kondensation von Feuchtigkeit im Gas und ein wärmeabgebendes Teil des Peltier-Elements führt dem Gas des Behandlungsraumes Wärmeenergie zu, um das Feuchtigkeitsaufnahmevermögen des Gases zu erhöhen. Damit kann sowohl der wärmeaufnehmende Teil des Peltier-Elements als auch der wärmeabgebende Teil des Peltier-Elements genutzt werden, so dass einerseits weniger Energie benötigt wird und andererseits die Trocknungsleistung bei geringerem Energieverbrauch verbessert wird.

Vorzugsweise strömt das Gas in einem Kreislauf vom wärmeaufnehmenden Teil des Peltier-Elements zum wärmeabgebenden Teil des Peltier-Elements und wieder zurück. Duch diese Konvektion des Gases wird vorteilhaft das Gas an einem Ort erwärmt und an einem anderen Ort abgekühlt, so dass sich das Abkühlen und Erwärmen nicht gegenseitig negativ beeinflussen.

In einer weiteren Ausführungsform ist die Strömung des Gases eine freie Konvektion, z. B. innerhalb des Behandlungsraums, oder eine erzwungene Konvektion, insbesondere verursacht durch ein Gebläse. Eine freie Konvektion hat den Vorteil, dass kein Gebläse benötigt wird. Bei einer erzwungenen Konvektion kann im Allgemeinen eine höhere Trocknungsleistung erreicht werden.

In einer weiteren Variante erfolgt die Strömung des Gases, insbesondere als erzwungene Konvektion, Wenigstens teilweise in einem Luftkanal. Die Strömung des Gases in einem Luftkanal hat den Vorteil, dass im Luftkanal gezielt Einrichtungen, z. B. Wärmetauscher, angeordnet werden können sowie die Luftführung im Behandlungsraum überwiegend nur in einer Richtung erfolgt, weil die Gegenströmung außerhalb des Behandlungsraumes erfolgt.

In einer zusätzlichen Ausführungsform entzieht das wärmeaufnehmende Teil des Peltier-Elements dem Gas im Behandlungsraum oder im Luftkanal Wärme.

Vorzugsweise führt das wärmeabgebende Teil des Peltier-Elements dem Gas im Behandlungsraum oder im Luftkanal Wärme zu.

In einer ergänzenden Variante wird mit dem wärmeaufnehmenden Teil dem Gas Wärme entzogen und gleichzeitig mit dem wärmeabgebenden Teil dem Gas Wärme zugeführt oder die Wärmeaufnahme und -abgabe wird zeitlich versetzt vorzugsweise mit einem Pufferspeicher durchgeführt. Wird zuerst nur eine Wärmeabgabe durchgeführt, kann zunächst das zu behandelnde Gut erwärmt werden, ohne dass vorteilhafterweise eine weitere Wärmequelle notwendig ist, weil ein Trocknen erst bei einer bestimmten Temperatur effektiv erfolgt. Nach Abschalten des Peltier-Elements und Abschluss des Trocknens kühlt der Pufferspeicher das Geschirr ab, so dass dieses abgekühlt und trocken dem Benutzer zur Verfügung steht.

In einem erfindungsgemäßen Haushaltsgerät, insbesondere Geschirrspülmaschine oder Waschtrockner bzw. Wäschetrockner, umfassend einen mit Gas, insbesondere Luft, befüllten Behandlungsraum, gebildet von einem Behälter, insbesondere Spülbehälter, für zu behandelndes Gut, insbesondere Geschirr, und ein Peltier-Element, aufweisend einen wärmeaufnehmenden Teil und einen wärmeabgebenden Teil, wobei das wärmeaufnehmende Teil dahingehend im Haushaltsgerät angeordnet ist, dass Wärmeenergie dem Gas des Behandlungsraums entzogen wird, ist außerdem ein wärmeabgebendes Teil dahingehend im Haushaltsgerät angeordnet, dass die Wärmeenergie an das Gas des Behandlungsraums abgegeben wird.

Erfindungsgemäß ist das wärmeaufnehmende Teil im Behandlungsraum oder in wärmeleitenden Kontakt mit einer Wandung des Behälters, insbesondere Spülbehälters, angeordnet. Dadurch tritt vorteilhafterweise eine Kondensation im Inneren des Spülbehälters auf, so dass sich Kondensationswasser im Behälter ansammeln kann.

In einer weiteren Ausführungsform ist das wärmeaufnehmende Teil über eine Kontaktplatte mit einer Wandung des Behälters, insbesondere Spülbehälters, thermisch und/oder mechanisch verbunden. Dadurch kann vorteilhafterweise das Wärmeübertragungsvermögen vom wärmeaufnehmenden Teil zur Wandung erhöht werden oder eine größere zu erwärmende Fläche an der Wandung des Behälters erreicht werden.

In einer ergänzenden Ausführungsform ist in einem Luftkanal, vorzugsweise mit einem Gebläse, mit einem Auslass und einem Einlass zum Behälter, insbesondere Spülbehälter, das wärmeabgebende Teil und/oder gegebenenfalls das wärmeaufnehmende Teil im wärmeleitenden Kontakt mit einer Wandung des Luftkanals oder im Luftkanal angeordnet ist oder als Teil der Wandung des Luftkanals ausgebildet. Dadurch kann vorteilhafterweise eine Wärmeabgabe und gegebenenfalls eine Wärmeaufnahme des Gases im Luftkanal erreicht werden, d. h. dieser Vorgang erfolgt gezielt außerhalb des Behälters, so dass die entsprechend thermisch behandelte Luft in den Behälter gezielt einströmen kann.

Vorzugsweise ist am wärmeabgebenden Teil und/oder gegebenenfalls wärmaufnehmenden Teil ein Wärmetauscher zur besseren Übertragung der Wärme an das Gas im Luftkanal angeordnet. Der Wärmetauscher ermöglicht insbesondere durch eine lamellenartige Oberfläche eine größere Oberfläche zwischen Gas und Wärmetauscher, so dass das Wärmeübertragungsvermögen erhöht wird.

In einer weiteren Variante ist das wärmeaufnehmende Teil in Strömungsrichtung des Gases im Luftkanal vor dem wärmeabgebenden Teil angeordnet. Dadurch wird vorteilhafterweise zuerst die vorhandene Feuchtigkeit durch Kondensation vermindert und anschließend durch Erwärmen die relative Luftfeuchtigkeit reduziert, d. h. die Trocknungsfähigkeit des Gases bzw. der Luft erhöht.

In einer zusätzlichen Variante ist im Luftkanal ein Kondensor und/oder eine vorzugsweise elektrische Heizung angeordnet ist. Mit einem Kondensor kann vorteilhafterweise dem Gas zusätzlich Feuchtigkeit entzogen werden und mit einer elektrischen Heizung die relative Luftfeuchtigkeit durch Erwärmen vermindert werden.

Vorzugsweise ist das Peltier-Element aus mehreren Einzelpeltier-Elementen zusammengesetzt, welche vorzugsweise in Reihe geschaltet sind und/oder vorzugsweise Halbleiter-Einzel-Peltier-Elemente sind.

Die Erfindung wird nachfolgend anhand von Zeichnungen beispielhaft erläutert. Es zeigen:
- Figur 1: einen Querschnitt durch eine erfindungsgemäße Geschirrspülmaschine,
- Figur 2: eine perspektivische Ansicht eines Peltier-Elements mit einer Kontaktplatte und einem Wärmetauscher und
- Figur 3: eine perspektivische Ansicht eines Spülbehälters in einer erfindungsgemäßen Geschirrspülmaschine.

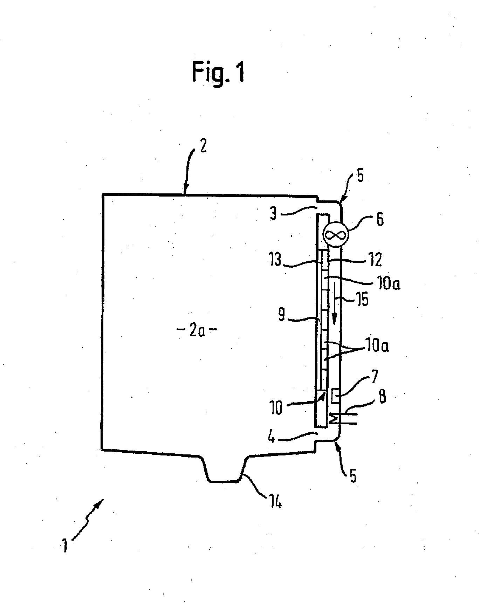

In Figur 1 ist der Querschnitt durch eine erfindungsgemäße Geschirrspülmaschine 1 mit einem Spülbehälter 2 dargestellt. Der Spülbehälter 2 umschließt einen Behandlungsraum 2a, in dem sich Geschirrkörbe mit Geschirr (nicht dargestellt) befinden. Die übrigen Teile der erfindungsgemäßen Geschirrspülmaschine 1 sind nicht dargestellt. Der Spülbehälter 2 verfügt über einen Spülbehältersumpf 14. Im oberen Bereich einer Seitenwandung des Spülbehälters 2 befindet sich ein Auslass 3 und im unteren Bereich der Seitenwandung des Spülbehälters 2 befindet sich ein Einlass 4. Der Auslass 3 und der Einlass 4 sind über einen Luftkanal miteinander verbunden. Der Auslass 3 und der Einlass 4 können auch an beliebig anderer Stelle des Spülbehälters 2 angeordnet werden. Im Luftkanal 5 ist ein Gebläse 6 und unter Umständen ergänzend ein Kondensor 7 und eine Heizung 8 angeordnet. Das Gebläse 6 wälzt die Luft des Behandlungsraums 2a entsprechend der Richtung von Pfeil 15 um. Auch eine umgekehrte Umwälzrichtung ist möglich. Die Luft wird damit am Auslass 3 aus dem Behandlungsraum 2a angesaugt und im Einlass 4 wieder in den Behandlungsraum 2a eingeblasen. Zwischen dem Luftkanal 5 und einer Seitenwandung des Spülbehälters 2 ist ein Peltier-Element 10, zusammengesetzt aus mehreren Einzel-Peltier-Elementen 10a, angeordnet. Beim Peltier-Element 10 handelt es sich beispielsweise um ein Metall-Peltier-Element oder um ein Halbleiter-Peltier-Element. Peltier-Elemente 10 haben die Eigenschaft, dass beim Anlegen einer Gleichspannung sich eine Seite erwärmt und die andere Seite abkühlt, d. h. das Peltier-Element 10 verfügt damit über einen wärmeabgebenden Teil 12 (warme Seite) und über einen wärmeaufnehmenden Teil 13 (kalte Seite). Der wärmeabgebende Teil 12 des Peltier-Elementes 10 ist im thermischen Kontakt mit dem Luftkanal 5 angeordnet und das wärmeaufnehmende Teil 13 des Peltier-Elements 10 ist in wärmeleitendem Kontakt mit dem Spülbehälter 2 ausgebildet. Das wärmeaufnehmende Teil 13 des Peltier-Elements 10 kann - neben dieser Anordnung - an jeder anderen beliebigen Wandung des Spülbehälters 2 angeordnet sein. Vorzugsweise ist zwischen dem wärmeaufnehmenden Teil 13 des Peltier-Elements 10 und der Seitenwandung des Spülbehälters 2 eine Kontaktplatte 9 angeordnet. Die Kontaktplatte 9 verfügt über ein sehr gutes Wärmeleitvermögen. Dadurch kann das Wärmeübertragungsvermögen vom wärmeaufnehmenden Teil 13 auf den Spülbehälter 2 verbessert werden. Ist die Kontaktplatte 9 größer als das Peltier-Element 10, kann die Kondensationsfläche im Spülbehälter 2 vergrößert werden. Gegebenenfalls ist auch möglich, dass auf die Kontaktplatte 9 verzichtet wird.

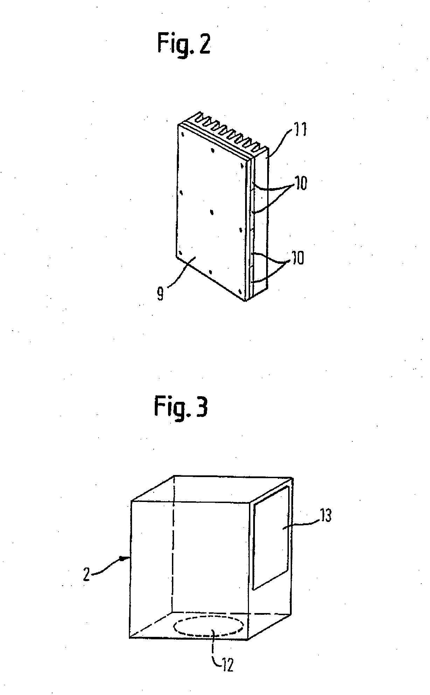

Am wärmeabgebenden Teil 12 des Peltier-Elements 10 kann ein Wärmetauscher 11 angeordnet sein (Figur 2). Der Wärmetauscher 11 verfügt über eine rippenförmige Vergrößerung der Oberfläche, sodass der Wärmeaustausch zwischen der Luft aus dem Spülbehälter, die durch den Luftkanal 5 geleitet wird, und dem Wärmetauscher 11, erheblich verbessert wird. Der Wärmetauscher 11 ist in Figur 1 nicht dargestellt, bildet jedoch eine Wandung des Luftkanals 5.

Zur Trocknung des Geschirrs (nicht dargestellt) in einem Teilprogrammschritt Trocknen in der erfindungsgemäßen Geschirrspülmaschine 1 wird an das Peltier-Element 10 mit den Einzelpeltier-Elementen 10a eine Gleichspannung angelegt. Dadurch kühlt das wärmeaufnehmende Teil 13 ab und das wärmeabgebende Teil 12 erwärmt sich. Das wärmeaufnehmende Teil 13 nimmt über die Kontaktplatte 9 und den Spülbehälter 2 Wärme aus dem Inneren des Behandlungsraums 2a auf. Das bedeutet, dass sich der Spülbehälter 2 im Bereich der aufliegenden Kontaktplatte 9 abkühlt und dadurch eine Kondensationsfläche für die mit Feuchtigkeit gesättigte Luft im Behandlungsraum 2a bildet. Die Feuchtigkeit kann damit am Spülbehälter 2 in diesem Bereich kondensieren und in den Spülbehältersumpf 14 abfließen. Durch das Gebläse 6 wird eine erzwungene Konvektion der Luft des Behandlungsraums 2 erreicht. Die im Auslass 3 angesaugte Luft wird im Luftkanal 5 durch den Wärmetauscher 11 von dem wärmeabgebenden Teil 12 des Peltier-Elements 10 erwärmt. Damit sinkt die relative Luftfeuchtigkeit der Luft im Luftkanal ab und diese erwärmte Luft kann damit wieder nach dem Eintritt über den Einlass 4 in den Behandlungsraum 2a Feuchtigkeit vom Geschirr aufnehmen, d. h. dieses trocknen. Es liegt somit ein durch das Gebläse erzwungener Luftströmungskreislauf vor. Es wird somit einerseits eine gekühlte Kondensationsfläche in einer Wandung des Spülbehälters 2 zur Verfügung gestellt, um die Feuchtigkeit aus der Luft durch Kondensation zu entfernen und andererseits wird durch das Erwärmen der Luft im Luftkanal 5 das Feuchtigkeitsaufnahmevermögen der Luft erhöht, sodass diese das Spülgut bzw. Geschirr schneller und effizienter trocknen kann. Gemäß der vorliegenden Erfindung werden somit sowohl die warme als auch die kalte Seite eines Peltier-Elements voll für den Trocknungsvorgang genutzt. Damit benötigt gemäß der vorliegenden Erfindung das Trocknungsverfahren deutlich weniger Energie, weil beide Seiten, d. h. sowohl die warme und die kalte Seite des Peltier-Elements, zur Trocknung genutzt werden und die Trocknungsleistung wird erheblich erhöht.

Ergänzend kann zusätzlich im Luftkanal 5 ein unter Umständen angeordneter Kondensor 7 und eine Heizung 8 genutzt werden. Der Kondensor 7 entzieht der Luft im Luftkanal 5 zusätzlich Feuchtigkeit, und die Heizung 8 erwärmt diese zusätzlich. Der Kondensor 7 und die Heizung 8 sind jedoch im Allgemeinen nicht notwendig. Der Kondensor 7 steht normalerweise im thermischen Kontakt mit der Umgebung.

In einer weiteren Ausführungsform der vorliegenden Erfindung kann auf das Gebläse 6 verzichtet werden (nicht dargestellt). Bei einem Verzicht auf das Gebläse 6 liegt keine erzwungene Konvektion der Luft vor, sondern eine freie Konvektion. Hierbei kehrt sich die Strömungsrichtung im Gegensatz zum Ausführungsbeispiel gemäß Figur 1 um. Die Luft strömt im Einlass 4 in den Luftkanal 5 ein, wird dort an der Kontaktplatte 9 erwärmt und tritt im Auslass 3 wieder in den Behandlungsraum 2a ein. Diese erwärmte Luft kann im Behandlungsraum 2 wieder Feuchtigkeit aufnehmen und wird am Spülbehälter 2 im Bereich der Kontaktplatte 9 abgekühlt, sinkt damit wieder nach unten und tritt erneut in den Einlass 4 ein.

In einer weiteren Ausführungsform der vorliegenden Erfindung ist sowohl der wärmeabgebende Teil 12 als auch der wärmeaufnehmende Teil 13 im Luftkanal 5 angeordnet. Der wärmeaufnehmende Teil 13 ist in Strömungsrichtung der Luft im Luftkanal 5 vor dem wärmeabgebenden Teil 12 des Peltier-Elements 10 angeordnet. Vorzugsweise wird bei dieser Ausführungsform eine erzwungene Konvektion mit einem Gebläse 6 ausgeführt. Die Luft im Luftkanal 5 wird damit zuerst abgekühlt, d. h. die Feuchtigkeit in der Luft kondensiert, und anschließend wieder erwärmt und damit trocken in den Behandlungsraum 2a eingeblasen. Das am wärmeaufnehmenden Teil 13 im Luftkanal 5 sich abscheidende Kondenswasser wird im Allgemeinen in das Innere des Spülbehälters 2 eingeleitet, d. h. es gelangt zum Spülbehältersumpf 14

In einer weiteren Ausführungsform der vorliegenden Erfindung (Figur 3) sind sowohl der wärmeabgebende Teil 12 des Peltier-Elements 10 als auch der wärmeaufnehmende Teil 13 in thermischem Kontakt mit einer Wandung des Spülbehälters 2 angeordnet. Vorzugsweise befindet sich der wärmeabgebende Teil 12 an einer Bodenwandung des Spülbehältes 2 und der wärmeaufnehmende Teil 13 an einer Seitenwandung des Spülbehälters 2. Aufgrund des Temperaturunterschieds zwischen dem wärmeabgebenden Teil und dem wärmeaufnehmenden Teil kommt es zu einer freien Konvektion der Luft im Behandlungsraum 2a. Im Allgemeinen ist zwischen dem Spülbehälter 2 und dem wärmeabgebenden Teil 12 bzw. dem wärmeaufnehmenden Teil 13 eine Kontaktplatte 9 angeordnet (nicht dargestellt). Die Kontaktplatte 9 hat die Aufgabe, den Wärmeenergieaustausch zwischen der Wandung des Spülbehälters 2 und dem wärmeabgebenden Teil 12 bzw. dem wärmeaufnehmenden Teil 13 zu verbessern, z. B. dadurch, dass die gekühlten oder erwärmten Flächen in den Wandungen des Spülbehälters 2 vergrößert werden. Ergänzend kann auch bei diesem Ausführungsbeispiel die freie Konvektion innerhalb des Behandlungsraums 2a durch ein Gebläse 6 unterstützt werden, welches sowohl innerhalb als auch außerhalb des Spülbehälters 2 in einem Luftkanal angeordnet sein kann (nicht dargestellt).

Ergänzend zu den bisherigen Ausführungen ist es in allen Ausführungsbeispielen möglich, am wärmeabgebenden Teil 12 und/oder am wärmeaufnehmenden Teil 13 einen Pufferspeicher anzubringen, um die Aufnahme oder die Abgabe von Wärmeenergie zeitlich zu verzögern. Beispielsweise kann am wärmeaufnehmenden Teil 13 ein Pufferspeicher angebracht werden (nicht dargestellt). Dadurch wird bei Inbetriebnahme des erfindungsgemäßen Trocknungsverfahrens zunächst nur vom wärmeabgebenden Teil 12 an die Luft des Behandlungsraums 2a Wärme abgegeben. Dadurch wird die Lufttemperatur im Behandlungsraum 2a erhöht, ohne dass eine Abkühlung durch die kalte Seite des Peltier-Elements 10 erfolgt. Nach dem Aufbrauch des Wärmeenergiespeichervermögens im Pufferspeicher erfolgt dann die Wärmeaufnahme und die Wärmeabgabe am wärmeabgebenden Teil 12 und am wärmeaufnehmenden Teil 13 gleichzeitig. Mit dem Abschalten der Gleichspannung am Peltier-Element 10 erfolgt keine Wärmeabgabe an der warmen Seite des Peltier-Elements 10, sondern nur noch eine Wärmeaufnahme über den Pufferspeicher am wärmeaufnehmenden Teil 13 des Peltier-Elements 10. Dadurch wird in besonders vorteilhafter Weise das Geschirr im Spülbehälter 2 einerseits abgekühlt und andererseits erfolgt weiterhin eine Kondensation, sodass der Benutzer der Geschirrspülmaschine beim unmittelbaren Öffnen der Tür am Spülbehälter nach Abschluss des Trockenvorgangs nicht über heißes Geschirr verfügt, sondern dieses bereits abgekühlt ist und das Geschirr damit unmittelbar wieder verwendet werden kann.

Insgesamt betrachtet ermöglicht das erfindungsgemäße Trocknungsverfahren für ein Haushaltsgerät und das erfindungsgemäße Haushaltsgerät, insbesondere eine erfindungsgemäße Geschirrspülmaschine, sowohl die warme Seite als auch die kalte Seite eines Peltier-Elements zur Trocknung einzusetzen. Durch den Einsatz auch der warmen Seite, d. h. des wärmeabgebenden Teils des Peltier-Elements, wird die Luft im Behandlungsraum des Haushaltsgeräts erwärmt, sodass die relative Luftfeuchtigkeit der Luft absinkt und damit das Feuchtigkeitsaufnahmevermögen der Luft ansteigt, was eine bessere Trocknungsleistung bedeutet. Damit ist es möglich, bei geringem Energieverbrauch das Trocknen von zu behandelnden Gut, insbesondere in Geschirrspülmaschinen, bei geringem Energieaufwand schnell und effizient zu gestalten.

## Patentansprüche

1. Trocknungsverfahren für ein Haushaltsgerät, insbesondere eine Geschirrspülmaschine (1) oder eine Waschtrockner bzw. Wäschetrockner, zur Trocknung von zu behandelndem Gut in einem mit Gas, insbesondere Luft, gefüllten Behandlungsraum (2a), gebildet von einem Behälter, wobei ein wärmeaufnehmendes Teil (13) eines Peltier-Elements (10) dem Gas des Behandlungsraumes (2a) Wärmeenergie entzieht zur Kondensation von Feuchtigkeit im Gas, und wobei ein wärmeabgebendes Teil (12) des Peltier-Elements (10) dem Gas des Behandlungsraumes (2a) Wärmeenergie zuführt, um das Feuchtigkeitsaufnahmevermögen des Gases zu erhöhen, **dadurch gekennzeichnet, dass** das wärmeaufnehmende Teil (13) im Behandlungsraum (2a) oder in wärmeleitenden Kontakt mit einer Wandung des Behälters, insbesondere Spülbehälters (2), des Haushaltsgeräts angeordnet ist.

2. Trocknungsverfahren nach Anspruch 1, **dadurch gekennzeichnet, dass** das Gas in einem Kreislauf vom wärmeaufnehmenden Teil (13) des Peltier-Elements (10) zum wärmeabgebenden Teil (12) des Peltier-Elements (10) und wieder zurück strömt.

3. Trocknungsverfahren nach Anspruch 2, **dadurch gekennzeichnet, dass** die Strömung des Gases eine freie Konvektion, z. B. innerhalb des Behandlungsraums (2a), oder eine erzwungene Konvektion, insbesondere verursacht durch ein Gebläse (6), ist.

4. Trocknungsverfahren nach Anspruch 3, **dadurch gekennzeichnet, dass** die Strömung des Gases, insbesondere als erzwungene Konvektion, wenigstens teilweise in einem Luftkanal (5) erfolgt.

5. Trocknungsverfahren nach Anspruch 4, **dadurch gekennzeichnet, dass** das wärmeaufnehmende Teil (13) des Peltier-Elements (10) dem Gas im Behandlungsraum (2a) oder im Luftkanal (5) Wärme entzieht.

6. Trocknungsverfahren nach Anspruch 4, **dadurch gekennzeichnet, dass** das wärmeabgebende Teil (12) des Peltier-Elements (10) dem Gas im Behandlungsraum (2a) oder im Luftkanal (5) Wärme zuführt.

7. Trocknungsverfahren nach einem der vorhergehenden Ansprüche, **dadurch gekennzeichnet, dass** mit dem wärmeaufnehmenden Teil (13) dem Gas Wärme entzogen wird und gleichzeitig mit dem wärmeabgebenden Teil (12) dem Gas Wärme zugeführt wird oder die Wärmeaufnahme und -abgabe zeitlich versetzt vorzugsweise mit einem Pufferspeicher durchgeführt wird.

8. Haushaltsgerät, insbesondere Geschirrspülmaschine (1) oder Waschtrockner bzw. Wäschetrockner, umfassend einen mit Gas, insbesondere Luft, befüllten Behandlungsraum (2a), gebildet von einem Behälter, insbesondere Spülbehälter (2), für zu behandelndes Gut, insbesondere Geschirr, und ein Peltier-Element (10), aufweisend einen wärmeaufnehmenden Teil (13) und einen wärmeabgebenden Teil (12), wobei das wärmeaufnehmende Teil (13) dahingehend im Haushaltsgerät angeordnet ist, dass Wärmeenergie dem Gas des Behandlungsraums (2) entzogen wird, und wobei das wärmeabgebende Teil (12) dahingehend im Haushaltsgerät angeordnet ist, dass die Wärmeenergie an das Gas des Behandlungsraums (2a) abgegeben wird, **dadurch gekennzeichnet, dass** das wärmeaufnehmende Teil (13) im Behandlungsraum (2a) oder in wärmeleitenden Kontakt mit einer Wandung des Behälters, insbesondere Spülbehälters (2), angeordnet ist.

9. Haushaltsgerät nach Anspruch 8, **dadurch gekennzeichnet, dass** das wärmeaufnehmende Teil (13) über eine Kontaktplatte (9) mit einer Wandung (2) des Behälters, insbesondere Spülbehälters (2), thermisch und/oder mechanisch verbunden ist.

10. Haushaltsgerät nach einem der Ansprüche 8 - 9, **dadurch gekennzeichnet, dass** in einem Luftkanal (5), vorzugsweise mit einem Gebläse (6), mit einem Auslass (3) und einem Einlass (4) zum Behälter, insbesondere Spülbehälter (2), das wärmeabgebende Teil und/oder gegebenenfalls das wärmeaufnehmende Teil (13) im wärmeleitenden Kontakt mit einer Wandung des Luftkanals (5) oder im Luftkanal (5) angeordnet ist oder als Teil der Wandung des Luftkanals (5) ausgebildet ist.

11. Haushaltsgerät nach Anspruch 10, **dadurch gekennzeichnet, dass** am wärmeabgebenden Teil (12) und/oder gegebenenfalls wärmaufnehmenden Teil (13) ein Wärmetauscher (11) zur besseren Übertragung der Wärme an das Gas im Luftkanal (5) angeordnet ist.

12. Haushaltsgerät nach Anspruch 10 oder 11, **dadurch gekennzeichnet, dass** das wärmeaufnehmende Teil (13) in Strömungsrichtung des Gases im Luftkanal (5) vor dem wärmeabgebenden Teil (12) angeordnet ist.

13. Haushaltsgerät nach einem der Ansprüche 10 bis 12, **dadurch gekennzeichnet, dass** im Luftkanal (5) ein Kondensor (7) und/oder eine vorzugsweise elektrische Heizung (8) angeordnet ist.

14. Haushaltsgerät nach einem der Ansprüche 8 bis 13, **dadurch gekennzeichnet, dass** das Peltier-Element (10) aus mehreren Einzelpeltier-Elementen (10a) zusammengesetzt ist, welche vorzugsweise in Reihe geschaltet sind und/oder vorzugsweise Halbleiter-Einzel-Peltier-Elemente (10a) sind.

15. Haushaltsgerät nach einem der Ansprüche 8 bis 14, **dadurch gekennzeichnet, dass** ein Trocknungsverfahren nach einem der Ansprüche 1 bis 7 ausführbar ist.

## Claims

1. Drying method for a household appliance, especially a dishwasher (1) or a washer dryer or tumble dryer, for drying items to be handled in a handling chamber (2a) filled with a gas, especially air, formed by a container, wherein a heat-absorbing part (13) of a Peltier element (10) extracts thermal energy from the gas of the handling area (2a) for condensation of moisture in the gas, and wherein a heat-releasing part (12) of the Peltier element (10) supplies thermal energy to the gas of the handling chamber (2a), in order to increase the capability of the gas to absorb moisture, **characterised in that** heat-absorbing part (13) is disposed in the handling chamber (2a) or is in heat-conducting contact with a wall of the container, especially washing container (2), of the household appliance.

2. Drying method according to claim 1, **characterised in that** the gas flows in a circuit from the heat-absorbing part (13) of the Peltier element (10) to the heat-releasing part (12) of the Peltier element (10) and back again.

3. Drying method according to claim 2, **characterised in that** the flow of the gas is a free convection, e.g. within the handling chamber (2a), or a forced convection, especially caused by a fan (6).

4. Drying method according to claim 3, **characterised in that** the flow of the gas, especially as forced convection, occurs at least partly in an air duct (5).

5. Drying method according to claim 4, **characterised in that** the heat-absorbing part (13) of the Peltier element (10) extracts heat from the gas in the handling chamber (2a) or in the air duct (5).

6. Drying method according to claim 4, **characterised in that** the heat-releasing part (12) of the Peltier element (10) supplies heat to the gas in the handling chamber (2a) or in the air duct (5).

7. Drying method according to one of the preceding claims, **characterised in that** heat is extracted from the gas with the heat-absorbing part (13) and simultaneously heat is supplied to the gas with the heat-releasing part (12) or the extraction and release of heat are carried out offset in time, preferably with a buffer.

8. Household appliance, especially dishwasher (1) or washer dryer or tumble dryer comprising a handling chamber (2a) filled with gas, especially air, formed by a container, especially a washing container (2), for items to be handled, especially dishes, and a Peltier element (10), having a heat-absorbing part (13) and a heat-releasing part (12), wherein the heat-absorbing part (13) is disposed in the household appliance such that the heat energy is extracted from the gas of the washing container (2), and wherein the heat-releasing part (12) is disposed in the household appliance such that the heat energy is emitted to the gas of the handling chamber (2a), **characterised in that** the heat-absorbing part (13) is disposed in the handling chamber (2a) or in heat-conducting contact with a wall of the container, especially washing container (2).

9. Household appliance according to claim 8, **characterised in that** the heat-absorbing part (13) is connected thermally and/or mechanically via a contact plate (9) with a wall (2) of the container, especially the washing container (2).

10. Household appliance according to one of claims 8 - 9, **characterised in that**, in an air duct (5), preferably with a fan (6), with an outlet (3) and an inlet (4) to the container, especially the washing container (2), the heat-releasing part and/or if necessary the heat-absorbing part (13) is in heat-conducting contact with a wall of the air duct (5) or is disposed in the air duct (5) or is embodied as a part of the wall of the air duct (5).

11. Household appliance according to claim 10, **characterised in that** a heat exchanger (11) for better transmission of the heat to the gas in the air duct (5) is disposed on the heat-releasing part (12) and/or if necessary the heat-absorbing part (13).

12. Household appliance according to claim 10 or 11, **characterised in that** the heat-absorbing part (13) is disposed in the flow direction of the gas in the air duct (5) before the heat-releasing part (12).

13. Household appliance according to one of claims 10 to 12, **characterised in that** a condenser (7) and /or a preferably electric heater (8) are disposed in the air duct (5).

14. Household appliance according to one of claims 8 to 13, **characterised in that** the Peltier element (10) is composed of a number of individual Peltier elements (10a), which are preferably connected in series and/or are preferably individual semiconductor Peltier elements (10a).

15. Household appliance according to one of claims 8 to 14, **characterised in that** a drying method according to one of claims 1 to 7 is able to be carried out.

## Revendications

1. Procédé de séchage pour un appareil ménager, notamment un lave-vaisselle (1) ou un lave-linge resp. sèche-linge, destiné au séchage de produits à traiter dans une chambre de traitement (2a) remplie de gaz, notamment d'air, formée par une cuve, une partie (13) absorbant la chaleur d'un élément Peltier (10), enlevant au gaz se trouvant dans la chambre de traitement (2a) de l'énergie calorifique pour la condensation d'humidité dans le gaz, et une partie (12) dégageant la chaleur de l'élément Peltier (10), amenant au gaz se trouvant dans la chambre de traitement (2a) de l'énergie calorifique afin d'augmenter la capacité d'absorption d'humidité du gaz, **caractérisé en ce que** la partie (13) absorbant la chaleur est disposée dans la chambre de traitement (2a) ou est en contact conducteur de chaleur avec une paroi de la cuve, notamment de la cuve de lavage (2) de l'appareil ménager.

2. Procédé de séchage selon la revendication 1, **caractérisé en ce que** le gaz circule dans un circuit, de la partie (13) absorbant la chaleur de l'élément Peltier (10) vers la partie (12) dégageant la chaleur de l'élément Peltier (10) et de nouveau en retour.

3. Procédé de séchage selon la revendication 2, **caractérisé en ce que** l'écoulement du gaz est une convection libre, par ex. à l'intérieur de la chambre de traitement (2a), ou une convection forcée, notamment provoquée par un ventilateur (6).

4. Procédé de séchage selon la revendication 3, **caractérisé en ce que** l'écoulement du gaz, notamment en tant que convection forcée, est réalisé en partie dans un canal d'air (5).

5. Procédé de séchage selon la revendication 4, **caractérisé en ce que** la partie (13) absorbant la chaleur de l'élément Peltier enlève de la chaleur au gaz se trouvant dans la chambre de traitement (2a) ou dans le canal d'air (5).

6. Procédé de séchage selon la revendication 4, **caractérisé en ce que** la partie (12) dégageant la chaleur de l'élément Peltier (10) amène de la chaleur au gaz se trouvant dans la chambre de traitement (2a) ou dans le canal d'air (5).

7. Procédé de séchage selon l'une quelconque des revendications précédentes, **caractérisé en ce qu'**avec la partie (13) absorbant la chaleur, de la chaleur est enlevée du gaz et **en ce que** simultanément avec la partie (12) dégageant la chaleur, de la chaleur est amenée au gaz ou **en ce que** l'absorption et le dégagement de chaleur sont réalisés de manière décalée dans le temps, de préférence au moyen d'une mémoire tampon.

8. Appareil ménager, notamment lave-vaisselle (1) ou lave-linge resp. sèche-linge, comprenant une chambre de traitement (2a) remplie de gaz, notamment d'air, formée par une cuve, notamment une cuve de lavage (2), pour des produits à traiter, notamment de la vaisselle, et comprenant un élément Peltier (10) présentant une partie (13) et une partie (12) dégageant la chaleur, la partie (13) absorbant la chaleur étant disposée dans l'appareil ménager de manière à ce que l'énergie calorifique soit dégagée du gaz de la chambre de traitement (2), et la partie (12) dégageant la chaleur étant disposée dans l'appareil ménager de manière à ce que l'énergie calorifique soit émise au gaz de la chambre de traitement (2a), **caractérisé en ce que** la partie (13) absorbant la chaleur est disposée dans la chambre de traitement (2a) ou est en contact conducteur de chaleur avec une paroi de la cuve, notamment de la cuve de lavage (2).

9. Appareil ménager selon la revendication 8, **caractérisé en ce que** la partie (13) absorbant la chaleur est reliée thermiquement et/ou mécaniquement à une paroi (2) de la cuve, notamment de la cuve de lavage (2), par l'intermédiaire d'une plaque de contact (9).

10. Appareil ménager selon l'une quelconque des revendications 8 à 9, **caractérisé en ce que** dans un canal d'air (5), de préférence muni d'un ventilateur (6), comprenant une sortie (3) et une entrée (4) vers la cuve, notamment la cuve de lavage (2), la partie dégageant la chaleur et/ou le cas échéant la partie (13) absorbant la chaleur sont disposées en contact conducteur de chaleur avec une paroi du canal d'air (5) ou dans le canal d'air (5) ou sont réalisées comme partie de la paroi du canal d'air (5).

11. Appareil ménager selon la revendication 10, **caractérisé en ce que** sur la partie (12) dégageant la chaleur et/ou le cas échéant sur la partie (13) absorbant la chaleur est disposé un échangeur de chaleur (11) pour un meilleur transfert de la chaleur au gaz dans le canal d'air (5).

12. Appareil ménager selon la revendication 10 ou 11, **caractérisé en ce que** la partie (13) absorbant la chaleur, dans le sens d'écoulement du gaz dans le canal d'air (5), est disposée devant la partie (12) dégageant la chaleur.

13. Appareil ménager selon l'une quelconque des revendications 10 à 12, **caractérisé en ce qu'**un condenseur (7) et/ou un dispositif de chauffage (8) de préférence électrique sont disposés dans le canal d'air (5).

14. Appareil ménager selon l'une quelconque des revendications 8 à 13, **caractérisé en ce que** l'élément Peltier (10) est assemblé à partir de plusieurs éléments Peltier individuels (10a), lesquels sont connectés de préférence en série et/ou sont de préférence des éléments Peltier individuels à semi-conducteur (10a).

15. Appareil ménager selon l'une quelconque des revendications 8 à 14, **caractérisé en ce qu'**un procédé de séchage selon l'une quelconque des revendications 1 à 7 peut être exécuté.
